# EUROPEAN PATENT SPECIFICATION

(11) **EP 1 580 174 B1**
(45) Date of publication and mention of the grant of the patent: **21.02.2007**
(21) Application number: 04425201.3
(22) Date of filing: 23.03.2004
(51) Int. Cl.: C04B 22/14

(54) **Process for preparing cement with a low hexavalent chromium content**
Verfahren zur Herstellung von chromatreduziertem Zement
Procédé pour la préparation du ciment avec une teneur en chromate réduite

(43) Date of publication of application: 28.09.2005
(73) Proprietor: Gruppo Chimico Dalton S.p.A., 20051 Limbiate, Milano (IT)
(72) Inventor: Cambria, Flavio, 20051 Limbiate (Milano) (IT); Cambria, Francesco, 20051 Limbiate (Milano) (IT); Orlandi, Angelo, 20051 Limbiate (Milano) (IT); Lanza, Roberto, 20051 Limbiate (Milano) (IT); Cambi, Stefano, 20051 Limbiate (Milano) (IT)
(74) Representative: Long, Giorgio

(56) References cited:
- WO-A-91/15435
- US-A- 2 962 467
- US-A- 4 193 811
- PATENT ABSTRACTS OF JAPAN vol. 1998, no. 14, 31 December 1998 (1998-12-31) & JP 10 236856 A (NIPPON SOLID CO LTD), 8 September 1998 (1998-09-08)
- PATENT ABSTRACTS OF JAPAN vol. 2000, no. 03, 30 March 2000 (2000-03-30) & JP 11 343162 A (TAIHEIYO CEMENT CORP), 14 December 1999 (1999-12-14)

## Description

The present invention relates to a method for producing cement which, when hydrated, contains an amount of hexavalent chromium less than 2 ppm ("chromates-free cement"). A second object of the present invention is the cement that can be obtained by means of this process.

The most widespread type of cement is Portland which is obtained by firing a mixture of limestone and clay in suitable proportions and finely grinding the fired product, known as "the clinker". Usually hydrated calcium sulphate is added in suitable amounts to regulate the hydration process. The firing step takes place in rotary furnaces. The mass to be fired is loaded from the top whilst from the opposite end air is blown in, to facilitate combustion. Inside the furnace a temperature of 1450 - 1500°C is reached. The hot clinker falls into a cooling rotating cylinder or into coaxial satellite cylinders with smaller dimensions, where it cools on encountering the air influx.

Subsequently the thus cooled clinker is ground in special mills and the powder obtained is graded with separators so as to recycle the particles that are not sufficiently fine. The cement gathered is automatically bagged or is transferred loose to silos or the users. In the grinding step, additives are usually added with the aim, for example, of favouring grinding, in order to obtain the correct setting speed, avoid excessive absorption of moisture and carbon dioxide etc.

All cements contain impurities of chromium (VI) compounds due to the raw materials or to the additions, usually made during the process of production.

The need to produce cement that, when hydrated contains an amount of Cr (VI) lower than 2 parts per million, originates from the high dangerousness of chromium compounds (VI) that can cause, after prolonged exposure, in addition to skin eczema serious and irreversible damage to health. The people most at risk from such damage are building industry workers who may come into daily contact with hydrated cement.

For this reason, the new EU directive 2003/53/EC prevents the sale and use of cement or cement-based preparations which contain, when hydrated, more than 2 parts per million of hexavalent chromium by dry weight of the cement itself.

Many publications and patents have existed for many years for preparing "chromates free" cement, based on different principles, applicative methods and products.

The principle applied is that of making the chromium (VI) insoluble in water, which can be achieved in two different ways: the first inolves transforming the hexavalent chromium, which is maily in the form of chrome dioxide and/or chromates, by reaction for example, with barium chloride, thus obtaining an insoluble salt, barium chromate.

The other principle involves making the hexavalent chromium insoluble by reducing it to trivalent chromium using different reagents with strong reducing effects. Naturally, the alkalinity of the cement itself will lead, according to the temperatures reached, to the formation of hydroxides, hydrated oxides and oxides, all compounds which are insoluble in water. Various patents also mention, in addition to the abovementioned barium chloride, other inorganic salts such as lead nitrate, and other inorganic and organic compounds with reducing characteristics, such as potassium iodide and ferrous sulphate. By using percentages that can vary from 0.01 to 4% of these compounds, according to the reducing capacity thereof and the practical possibility of reacting on the basis of the conditions of use, it is possible to obtain a reduction in the amount of chromium (VI) up to 2 ppm maximum.

For example US 4,572,739 describes the use of ferrous sulphate as a reducing agent. This method has a number of problems. Firstly, ferrous sulphate, on contact with the air, is oxidised to ferric sulphate, thus losing its reducing capacity. It is necessary, therefore, to use particles of ferrous sulphate coated with an anti-oxidising material. Furthermore, if excessive quantities of FeSO₄ are used, there is a delaying effect on the setting speed of the cement itself; in addition to this the product could be corrosive for machinery and the silos.

WO 91/15435 describes a method for reducing the chromium (VI) content by admixing a manganese (II) salt.

EP0697380 Italcementi, in the name of Castaldi, Carazza, Cassar, describes a method for reducing the chromium (VI) to chromium (III) by means of organic products, mainly aldehydes, from the simpler ones such as formaldehyde, acetaldehyde, paraformaldehyde etc., to more sophisticated products such as, for example, 1,8-octanedial and 1,1,8,8-tetramethoxyoctane. In this case, these are organic reducing agents that can reduce the chromates in the different steps of the cement production process, i.e. before, during or after the grinding of the clinker with calcium sulphate.

This process is undoubtedly valid but it may encounter certain unfavourable aspects: the products which are cheaper and have lower molecular weights, for example formaldehyde, may dangerously be released from the aqueous solution in a gaseous state, whereas the more complex stable and sophisticated products are more expensive.

The problems posed by the abovementioned methods can be overcome by this invention.

The present invention, in fact, provides a method of preparation for cement that, when hydrated, contains an amount of hexavalent chromium lower than 2 ppm, comprising the step of adding to the cement or a processing intermediate thereof, disulphides of ammonium, alkaline metals and earth alkaline metals and/or polysulphides of ammonium, alkaline metals, and earth alkaline metals.

With "disulphides" is meant the products with formula MeₘSₙ where Me is NH₄, alkaline metals and earth alkaline metals, n is equal to 2 and m is 1 or 2.

With "polysulphides" is meant the products with formula MeₘSₙ where Me is NH₄, alkaline metals and earth alkaline metals, n is 2 to 6 and m is 1 or 2. Preferably, these reducing agents are chosen among: sodium tetrasulphide, calcium pentasulphide, barium pentasulphide, potassium polysulphides, ammonium polysulphides, sodium disulphides, calcium disulphide, barium disulphide, potassium disulphide and/or mixtures thereof.

More preferably, said reducing agents are chosen among: sodium disulphide, calcium disulphide, calcium pentasulphide, sodium tetrasulphide, barium pentasulphide and/or mixtures thereof.

In one preferred aspect of the invention, said disulphides and/or polysulphides are added to the cement or to processing intermediates thereof in mixtures with one or more sulphides of alkaline metals or earth alkaline metals. Said sulphides are preferably added to solutions of said disulphides and/or polysulphides. Said solutions contain a concentration of sulphides of 0.1% to 10% by weight of the polysulphide and/or disulphide, preferably of 0.5% to 5%. Preferably, said sulphides and polysulphides (and/or disulphides) are sulphides and polysulphides (and/or disulphides) of the same metal chosen between the alkaline or earth alkaline metals.

Such polysulphides, richer in sulphur, alone or in mixtures with said sulphides, equally efficient, are preferable as they do not emanate this unpleasant odour that makes the use of sulphides, alone and in large quantities, almost impracticable.

The presence of water is essential for the reduction reaction of hexavalent chromium to trivalent chromium. Normally, said reaction takes place during the cement hydration step prior to use. It is however possible that during the clinker grinding step a partial reduction may be obtained as a certain amount of water is added in order to control the grinding temperature.

It is important to point out that in the additivation step of these products, during cement production, there may be oxidation reactions of the polysulphides to thiosulphates (S₂O₃²⁻). These reactions are caused by the oxidating atmosphere or by the operating temperatures. The thiosulphates are watersoluble and they too, in this medium, reduce the hexavalent chromium. In the case of sulphides S²⁻, however, the oxidation gives sulphites (SO₃²⁻) or sulphates (SO₄²⁻) the former not very soluble and the latter inactive as they are not reducing agents.

Said disulphides and/or polysulphides are applied as solids or, as aqueous solutions at concentration of 1% to 50%, preferably of 10% to 40%. The disulphides and/or polysulphides could also be used as saturated solutions i.e. suspensions in a more or less fine solid form, containing also some superior homologues (thiosulphates etc. which also have a reducing effect on the hexavalent chromium).

The amount of solution or optionally the suspension which is introduced during manufacture must be dosed according to the quantity, in parts per million, of hexavalent chromium in the cement. It is advisable, on the basis of the experiments performed, to use quantities in excess of the stoichiometric amount required, in order to be certain of reaching the desired result. It is therefore clear, that for each cement, according to the origin or better the composition thereof, the correct amount and the best technology must be experimented and tested. Normally, the amount of solid used is 0.01% to 2%, preferably is 0.02% to 0.1% by weight of the cement or the processing intermediates thereof. The amount of reducing solution that can be used is 0.02% to 5%, preferably it is 0.05% to 0.5% by weight of cement or the processing intermediates thereof. For example, it will be sufficient to use sodium disulphide, 0.02% to 0.1% of the anhydrous product or 0.1% to 0.5% of a solution at a concentration of 25-30%, in the case of cement containing 20 mg of hexavalent chromium per kg of cement.

The procedure according to the invention may thus comprise the step of determining the percentage of chromium (VI) in the cement or in the processing intermediates thereof by means of Unichim method no. 1693 2004 edition and colourimetric method with diphenylcarbazide. The subsequent operation will relate to the calculation of the reducing agent percentage to be used in the treatment step, such percentage will comprise an adequate molar excess of the amount of chromium (VI). Said molar excess is 1% to 5.000%, preferably 20% to 2.000% of the stoichimetric amount theoretically necessary to reduce the hexavalent chromium to less than 2 ppm.

The reducing agents, solids, in solution or in suspension, may be applied either at the various steps of the cement processing or by simple additivation when the cement is finished in the storage, transport or dispatch step by means of suitably studied dosing systems. The use in the clinker grinding step can be optimum.

In such a case, in fact, the product may be dosed, suitable diluted, at the nozzles dispensing the water, which controls the grinding temperature, separately or together with the grinding adjuvants normally used, and optionally also with other additives such as: fluidifiers, superfluidifiers, accelerating agents, retarders, anti-corrosion agents etc.; for many of these products compatibility in solution with different disulphides and polysulphides has been verified. For example, solutions of polysulphides can be added to the cement together with solutions of polymethane naphthalene sulphonates or modified polymethane naphthalene sulphonates, and grinding adjuvants such as sodium chloride or triethanolamine acetate. One can thus reduce the hexavalent chromium and simultaneously confer particularly interesting characteristics on the cement, i.e. fluidity in the dispersion step in the presence of reduced quantities of water, thus facilitating, simultaneously, the distribution of the disulphide or polysulphide, and therefore the efficiency thereof as reducing agents of the hexavalent chromium. With "modified polymethane naphthalene sulphonates" is meant polymethane naphthalene sulphonates in the form of sodium, potassium and calcium salts additivised with adjuvants, accelerating agents or retardants or neutralised with amines such as triethanolamine.

Said grinding adjuvants are solutions of sodium chloride and triethanolamine acetate in overall concentrations of 20% to 40%, preferably 25%-35%, which are added, in the grinding step, in quantities of 0.1% to 3%, preferably of 0.1% to 1% by weight of clinker.

Said solutions of polymethane naphthalene sulphonates and modified polymethane naphthalene sulphonates have concentrations of about 40% and are added in quantities of 0.1% to 2%, preferably of 0.3% to 1% by weight of clinker.

The results of the tests performed on finished concrete confirm the validity of the rheological characteristics of the concrete and the characteristics of the finished constructions.

The reducing agent application temperatures depend on at which step of the cement production cycle they are added. For example, in the clinker grinding step the temperature should not exceed 125°C and is normally of 50° to 120°C, preferably of 90°C to 110°C.

The advantages of using disulphides and/or polysulphides of ammonium, alkaline or earth alkaline metals instead of other reducing agents, are : a limited cost, high solubility, they are easily dispersible and above all are characterised by a high reducing power.

In fact, let's compare the oxidoreduction reactions of the chromate CrO₄²⁻ with FeSO₄·7H₂O (ferrous sulphate heptahydrate, with molecular weight 278.01), with Na₂S₂ (sodium disulphide having a molecular weight of 110.10) and with Na₂S₄ (sodium tetrasulphide having a molecular weight 174.23). In order to oxidise one mole of Cr^{VI} 3 moles of FeSO₄·7H₂O are required, equal to 834.03 grams, or 1.5 mole of Na₂S₂ or Na₂S₄, equal to 165.15 and 261.34 grams respectively, as is given by the stoichiometric relationships of the following oxidoreductions:

Cr⁶⁺ + 3Fe²⁺ ---> Cr³⁺ + 3Fe³⁺

2Cr⁶⁺ + 3S₂ ⁻⁻ ---> 2Cr³⁺ + 6S

2Cr⁶⁺ + 3S₄ ⁻⁻ ---> 2Cr³⁺ + 12S

Furthermore, when they are oxidised to partial intermediates, such as for example, thiosulphates, these too have a considerable residual reducing power.

Another advantage is the possibility of applying these reducing agents in aqueous solution or dispersion thus preventing any direct handling of the powders and enabling automatic and therefore more accurate dosing in the various possible production steps.

One of the other advantages is that the product could be introduced together with other additives and/or grinding adjuvants so as to obtain cements with particularly valid characteristics.

In certain types of cement one can encounter further considerable advantages due to the fact that the polysulphides can also react with group ten metals, thus making them insoluble and, therefore, determining their inertisation in the final product.

For example, it is known that the sodium polysulphide used in solution in the fume abatement scrubber of incinerator furnaces insolubilises the sublime mercury. It is also known to use sulphides and polysulphides, such as those of calcium, in order to block metals such as cadmium, lead, zinc and nickel in the steps of muds inertisation, reclamation or making safe of polluted areas or in the controlled treatment of water containing such metals in quantities exceeding current regulations.

### EXAMPLE 1

1 kg of cement was treated in a rotary mixer by spraying, in a number of portions, a total of 10g of sodium disulphide solution at 10% (0.1%), in order to facilitate absorption thereof. After 1 hour of rotation at room temperature 100g of the thus obtained cement were removed and subject to Unichim test No. 1693 (2004 edition). In practice, the 100 grams were dispersed in 100g of deionised water, stirring vigorously for 30' with an electromagnetic stirrer. The clear solution obtained by filtration is analysed for the determination of the hexavalent chromium with ionic chromatography. The hexavalent chromium content was 0.8 ppm.

In alternative to chromatography one can use the method with diphenylcarbazide.

### COMPARATIVE EXAMPLE 2

The same experiment performed in example 1 was performed on cement not additivised with sodium disulphide, the hexavalent chromium proving to be present in quantities of approximately 20 ppm.

### EXAMPLE 3

In the same conditions as example 1, but using 10g of calcium pentasulphide CaS₅ at 10%. Once again in this case the hexavalent chromium identified proved to be lower than the 2 ppm of the legal limit.

### EXAMPLE 4

In the same conditions as example 1 but using 10 g of solution of Na₂S₄, sodium tetrasulphide, at 10%. The residual hexavalent chromium was lower than 2 ppm.

### EXAMPLE 5

In the same conditions as example 1 but using 20 g of solution of BaS₅, barium pentasulphide, at 30%. The hexavalent chromium was lower than 2 ppm.

### EXAMPLE 6

In the same conditions as example 1, using in addition to the 10 g of sodium disulphide solution at 10% also 10g of sodium chloride and triethanolamine acetate (grinding adjuvants) at approximately 30% overall concentration. The residual hexavalent chromium was lower than 2 ppm.

### EXAMPLE 7:

In the same conditions as example 1 but using 20g of a solution obtained by mixing in proportions of 1:1 a 25% sodium tetrasulphide solution with a sodium chloride and triethanolamine acetate solution (grinding adjuvants) at approximately 30% of active substance.

## Claims

1. A method for preparing cement which, when hydrated, contains an amount of hexavalent chromium lower than 2 ppm, comprising the step of adding to the finished cement or to a processing intermediate thereof, disulphides of ammonium, metal alkalines, earth alkaline metals and/or polysulphides of ammonium, alkaline metals or earth alkaline metals.

2. The method according to claim 1 wherein said disulphides and/or polysulphides are applied as solids.

3. The method according to claim 2 wherein said disulphides and/or polysulphides are applied in quantities of 0.01% to 2%, preferably of 0.02% to 0.10% by weight of the cement or processing intermediates thereof.

4. The method according to any of claims 1 to 3 wherein said disulphides and/or polysulphides are applied as aqueous solutions at concentration of 1% to 50%, preferably of 10% to 40% or as saturate aqueous solutions held in suspension.

5. The method according to claim 4 wherein said disulphides and/or polysulphides are applied in quantities of 0.02% to 5%, preferably of 0.05% to 0.5% by weight of cement or processing intermediates thereof.

6. The method according to any of claims 1 to 5 wherein said disulphides and/or polysulphides are added in the cement production steps chosen among: the clinker grinding step or steps subsequent to grinding, such as for example transport to silos, storage in silos and/or wrapping.

7. The method according to any of claims 1 to 6 wherein said disulphides and/or polysulphides are added in the clinker grinding step either separately or together with grinding adjuvants.

8. The method according to any of claims 1 to 7 wherein said disulphides and/or polysulphides are added in the clinker grinding step either separately or together with grinding adjuvants and additives chosen among: fluidifiers, superfluidifiers, accelerator agents, retarders, anti-corrosion agents.

9. The method according to claim 7 or 8 wherein said grinding adjuvants are aqueous solutions of sodium chloride and triethanolamine.

10. The method according to any of claims 7 to 9 wherein said grinding adjuvants solutions have overall concentration of 20% to 40%, preferably of 25% to 35%.

11. The method according to any of claims 7 to 10 wherein said grinding adjuvants are added in quantities of 0.1% to 3%, preferably of 0.1% to 1% by weight of clinker.

12. The method according to claim 8 wherein said other additives are chosen among: polymethane naphthalene sulphonates, modified polymethane naphthalene sulphonates, in the form of sodium, potassium calcium salts, additivised with adjuvants, accelerating agents or retardants, or neutralised with amines such as triethanolamine.

13. The method according to claim 12 wherein said polymethane naphthalene sulphonates and modified polymethane naphthalene sulphonates are solutions having concentrations equal to approximately 40%.

14. The method according to claims 12 and 13 wherein said solutions of polymethane naphthalene sulphonates and modified polymethane naphthalene sulphonates are added in overall quantities of 0.1% to 2%, preferably of 0.3% to 1% by weight of clinker.

15. The method according to any of claims 1 to 14 wherein said disulphides and/or polysulphides are added in the clinker grinding step at a temperature of 50° to 120°C, preferably of 90° to 110°C.

16. The method according to any of claims 1 to 15 wherein said disulphides and/or polysulphides are chosen among: barium pentasulphide, calcium pentasulphide, sodium tetrasulphide, potassium polysulphides, ammonium polysulphides, sodium disulphide, calcium disulphide, barium disulphide, potassium disulphide and/or mixtures thereof.

17. The method according to any of claims 1 to 16 wherein said disulphides and/or polysulphides are chosen among sodium disulphide, calcium disulphide, calcium pentasulphide, sodium tetrasulphide, barium pentasulphide and/or mixtures thereof.

18. The method according to any of claims 1 to 17 wherein said disulphides and/or polysulphides are added to the cement, or processing intermediate thereof, in a mixture with one or more sulphides of alkaline or earth alkaline metals.

19. The method according to claim 18 wherein said sulphides are added to solutions of said disulphides and/or polysulphides.

20. The method according to claim 18 or 19 wherein the solutions of disulphide and/or polysulphide contain an amount of said sulphides of 0.1% to 10% by weight of the polysulphide and/or disulphide, preferably of 0.5% to 5%.

21. The method according to any of claims 1 to 20 further comprising the steps of determining the percentage of hexavalent chromium in the cement and calculating the percentage of reducing agent to be used in the treatment step.

22. The method according to claim 21 wherein said percentage of reducing agent to be used comprises an excess of 1% to 5.000%, preferably of 20% to 2.000% of the stoichiometric amount theoretically necessary to reduce the hexavalent chromium to less than 2 ppm.

## Patentansprüche

1. Verfahren zur Herstellung eines Zementes, welcher, wenn er hydriert ist, eine geringere Menge an sechswertigen Chrom enthält als 2 ppm, umfassend den Schritt des Zugebens von Disulphiden von Ammonium, Alkalimetallen, Erdalkalimetallen und/oder Polysulphiden von Ammonium, Alkalimetallen oder Erdalkalimetallen zu dem fertiggestellten Zement oder zu einem Verarbeitungszwischenprodukt dessen.

2. Verfahren nach Anspruch 1, wobei die Disulphide und/oder Polysulphide als Feststoffe aufgebracht werden.

3. Verfahren nach Anspruch 2, wobei die Disulphide und/oder Polysulphide in Mengen von 0,01 Gew.-% bis 2 Gew.-%, vorzugsweise von 0,02 Gew.-% bis 0,10 Gew.-% des Zements oder dessen Verarbeitungszwischenproduktes aufgebracht werden.

4. Verfahren nach einem der Ansprüche 1 bis 3, wobei die Disulphide und/oder Polysulphide als wässrige Lösungen mit einer Konzentration von 1 bis 50 %, vorzugsweise von 10 % bis 40 % aufgebracht werden, oder als eine gesättigte wässrige Lösung, die in Suspension gehalten wird.

5. Verfahren nach Anspruch 4, wobei die Disulphide und/oder Polysulphide in Mengen von 0,02 Gew.-% bis 5 Gew.-%, %, vorzugsweise von 0,05 Gew.-% bis 0,5 Gew.-% des Zements oder dessen Verarbeitungszwischenproduktes aufgebracht werden.

6. Verfahren nach einem der Ansprüche 1 bis 5, wobei die Disulphide und/oder Polysulphide während der Zementherstellungsschritte zugegeben werden, gewählt aus: dem Klinkermahlschritt oder den Schritten nach dem Mahlen, wie zum Beispiel die Beförderung zu den Silos, Lagerung in den Silos und/oder das Verpacken.

7. Verfahren nach einem der Ansprüche 1 bis 6, wobei die Disulphide und/oder Polysulphide während des Klinkermahlschrittes entweder separat oder zusammen mit Mahlhilfsmitteln zugegeben werden.

8. Verfahren nach einem der Ansprüche 1 bis 7, wobei die Disulphide und/oder Polysulphide während des Klinkermahlschrittes entweder separat oder zusammen mit Mahlhilfsmitteln und Zusatzstoffen zugegeben werden, gewählt unter: Verflüssiger, Superverflüssiger, Beschleunigungsmittel, Verzögerungsmittel, Korrosionsschutzsmittel.

9. Verfahren nach Anspruch 7 oder 8, wobei die Mahlhilfsmittel wässrige Lösungen aus Natriumchlorid und Triethanolamin sind.

10. Verfahren nach einem der Ansprüche 7 bis 9, wobei die Mahlhilfsmittellösung eine gesamte Konzentration von 20 % bis 40 %, vorzugsweise von 25 % bis 35 %, aufweisen.

11. Verfahren nach einem der Ansprüche 7 bis 10, wobei die Mahlhilfsmittel in Mengen von 0,1 Gew.-% bis 3 Gew.-%, vorzugsweise von 0,1 Gew.% bis 1 Gew.-% der Klinker zugegeben werden.

12. Verfahren nach Anspruch 8, wobei die anderen Zusatzstoffe gewählt werden unter: Polymethannaphthalensulphonaten, modifizierten Polymethannaphthalensulphonaten, in der Form von Natrium-, Kaliumkalziumsalzen, welche mit Hilfsmitteln versetzt sind, Beschleunigungsmittel oder Verzögerungsmittel, oder neutralisiert mit Aminen, wie Triethanolamin.

13. Verfahren nach Anspruch 12, wobei die Polymethannaphtalensulphonate und modifizierten Polymethannaphthalensulphonate Lösungen mit Konzentrationen entsprechend ungefähr 40 % sind.

14. Verfahren nach Anspruch 12 oder 13, wobei die Lösungen aus Polymethannaphthalensulphonaten und modifizierten Polymethannaphthalensulphonaten in einer gesamten Menge von 0,1 Gew.-% bis 2 Gew.-%, vorzugsweise von 0,3 Gew.-% bis 1 Gew.-% der Klinker zugegeben werden.

15. Verfahren nach Anspruch 1 bis 14, wobei die Disulphide und/oder Polysulphide während des Klinkermahlschrittes bei einer Temperatur von 50° bis 120 °C, vorzugsweise 90° bis 110 °C zugegeben werden.

16. Verfahren nach einem der Ansprüche 1 bis 15, wobei die Disulphide und/oder Polysulphide gewählt werden unter: Bariumpentasulphid, Kalziumpentasulphid, Natriumtetrasulphid, Kaliumpolysulphid, Ammoniumpolysulphid, Natriumdisulphid, Kalziumdisulphid, Bariumdisulphid, Kaliumdisulphid und/oder Mischungen dieser.

17. Verfahren nach einem der Ansprüche 1 bis 16, wobei die Disulphide und/oder Polysulphide unter Natriumdisulphid, Kalziumdisulphid, Kalziumpentasulphid, Natriumtetrasulphid, Bariumpentasulphid und/oder dessen Mischungen gewählt werden.

18. Verfahren nach einem der Ansprüche 1 bis 17, wobei die Disulphide und/oder Polysulphide zu dem Zement oder dessen Verarbeitungszwischenprodukt in einer Mischung mit einem oder mehreren Sulphiden von Alkali- oder Erdalkalimetallen zugegeben werden.

19. Verfahren nach Anspruch 18, wobei die Sulphide zu der Lösung der Disulphide und/oder Polysulphide zugegeben werden.

20. Verfahren nach Anspruch 18 oder 19, wobei die Lösung von Disulphid und/oder Polysulphid eine Menge dieser Sulphide von 0,1 Gew.-% bis 10 Gew.-% des Polysulfphid und/oder Disulphid enthält, vorzugsweise von 0,5 Gew.-% bis 5 Gew.-%.

21. Verfahren nach Anspruch 1 bis 20, des Weiteren umfassend den Schritt des Bestimmens des Prozentanteils von sechswertigen Chrom in dem Zement und Berechnen des Prozentanteils des Reduktionsmittels, welches in dem Behandlungsschritt verwendet werden soll.

22. Verfahren nach Anspruch 21, wobei der Prozentanteil des Reduktionsmittels, welches verwendet werden soll, einen Überschuss von 1 % bis 5.000 %, vorzugsweise von 20 % bis 2.000 % der stoichiometrischen Menge umfasst, die theoretisch notwendig ist, um das sechswertige Chrom auf weniger als 2 ppm zu reduzieren.

## Revendications

1. Procédé destiné à préparer un ciment qui, quand il est hydraté, contient une quantité de chrome hexavalent inférieure à 2 ppm, comprenant l'étape d'ajouter au ciment fini ou à un intermédiaire de traitement de celui-ci, des disulfures d'ammonium, de métaux alcalins, de métaux alcalinoterreux et/ou des polydisulfures d'ammonium, de métaux alcalins ou de métaux alcalinoterreux.

2. Procédé selon la revendication 1 dans lequel lesdits disulfures et/ou polysulfures sont appliqués sous forme de solides.

3. Procédé selon la revendication 2 dans lequel lesdits disulfures et/ou polysulfures sont appliqués à raison de quantités de 0,01 % à 2 %, de préférence de 0,02 % à 0,10 % en poids du ciment ou des intermédiaires de traitement de celui-ci.

4. Procédé selon l'une quelconque des revendications 1 à 3 dans lequel lesdits disulfures et/ou polysulfures sont appliqués sous forme de solutions aqueuses à une concentration de 1 % à 50 %, de préférence de 10 % à 40 % ou sous forme de solutions aqueuses saturées maintenues en suspension.

5. Procédé selon la revendication 4 dans lequel lesdits disulfures et/ou polysulfures sont appliqués à raison de quantités de 0, 02% à 5 %, de préférence de 0,05 % à 0, 5 % en poids du ciment ou des intermédiaires de traitement de celui-ci.

6. Procédé selon l'une quelconque des revendications 1 à 5 dans lequel lesdits disulfures et/ou polysulfures sont ajoutés au cours des étapes de production du ciment choisies parmi : l'étape de broyage du clinker ou les étapes subséquentes au broyage, telles que par exemple le transport vers des silos, le stockage dans des silos et/ou l'emballage.

7. Procédé selon l'une quelconque des revendications 1 à 6 dans lequel lesdits disulfures et/ou polysulfures sont ajoutés au cours de l'étape de broyage du clinker soit séparément, soit en même temps que des adjuvants de broyage.

8. Procédé selon l'une quelconque des revendications 1 à 7 dans lequel lesdits disulfures et/ou polysulfures sont ajoutés au cours de l'étape de broyage du clinker soit séparément, soit en même temps que des adjuvants de broyage et des additifs choisis parmi : des fluidifiants, des super-fluidifiants, des agents accélérateurs, des retardateurs, des agents anti-corrosion.

9. Procédé selon la revendication 7 ou 8 dans lequel lesdits adjuvants de broyage sont des solutions aqueuses de chlorure de sodium et de triéthanolamine.

10. Procédé selon l'une quelconque des revendications 7 à 9 dans lequel lesdites solutions aqueuses d'adjuvants de broyage possèdent une concentration globale de 20 % à 40 %, de préférence de 25 % à 35 %.

11. Procédé selon l'une quelconque des revendications 7 à 10 dans lequel lesdits adjuvants de broyage sont ajoutés selon des quantités de 0,1 % à 3 %, de préférence de 0,1 % à 1 % en poids du clinker.

12. Procédé selon la revendication 8 dans lequel lesdits autres additifs sont choisis parmi : le polyméthane naphtalène, des sulfonates, des sulphonates de polyméthane naphtalène modifiés, sous la forme de sels de sodium, de potassium, de calcium, additivé d'adjuvants, d'agents accélérateurs ou de retardateurs, ou neutralisés avec des amines telles que la triéthanolamine.

13. Procédé selon la revendication 12 dans lequel lesdits sulfonates de polyméthane naphtalène et sulfonates de polyméthane naphtalène modifiés sont des solutions possédant des concentrations égales à approximativement 40 %.

14. Procédé selon les revendications 12 et 13 dans lequel lesdites solutions de sulfonates de polyméthane naphtalène et de sulfonates de polyméthane naphtalène modifiés sont ajoutées à raison de quantités globales de 0,1 % à 2 %, de préférence de 0,3 % à 1 % en poids du clinker.

15. Procédé selon l'une quelconque des revendications 1 à 14 dans lequel lesdits disulfures et/ou polysulfures sont ajoutés au cours de l'étape de broyage du clinker à une température de 50 ° à 120 °C, de préférence de 90 ° à 110 °C.

16. Procédé selon l'une quelconque des revendications 1 à 15 dans lequel lesdits disulfures et/ou polysulfures sont choisis parmi : le pentasulfure de baryum, le pentasulfure de calcium, le tétrasulfure de sodium, des polysulfures de potassium, des polysulfures d'ammonium, le disulfure de sodium, le disulfure de calcium, le disulfure de baryum, le disulfure de potassium et/ou des mélanges de ceux-ci.

17. Procédé selon l'une quelconque des revendications 1 à 16 dans lequel lesdits disulfures et/ou polysulfures sont choisis parmi le disulfure de sodium, le disulfure de calcium, le pentasulfure de calcium, le tétrasulfure de sodium, le pentasulfure de baryum et/ou des mélanges de ceux-ci.

18. Procédé selon l'une quelconque des revendications 1 à 17 dans lequel lesdits disulfures et/ou polysulfures sont ajoutés au ciment, ou à un intermédiaire de traitement de celui-ci, en un mélange avec un ou plusieurs sulfures de métaux alcalins ou alcalinoterreux.

19. Procédé selon la revendication 18 dans lequel lesdits sulfures sont ajoutés aux solutions desdits disulfures et/ou polysulfures.

20. Procédé selon l'une quelconque des revendications 1 à 19 dans lequel les solutions de disulfure et/ou de polysulfure contiennent une quantité desdits sulfures de 0,1 % à 10 % en poids du polysulfure et/ou du disulfure, de préférence de 0,5 % à 5 %.

21. Procédé selon l'une quelconque des revendications 1 à 20 comprenant en outre les étapes consistant à déterminer le pourcentage de chrome hexavalent dans le ciment et à calculer le pourcentage d'agent réducteur à utiliser au cours de l'étape de traitement.

22. Procédé selon la revendication 21 dans lequel ledit pourcentage d'agent réducteur à utiliser comprend un excès de 1 % à 5 000 %, de préférence de 20 % à 2 000 % de la quantité stoechiométrique théoriquement nécessaire pour réduire le chrome hexavalent jusqu'à moins de 2 ppm.
